(19) Europäisches Patentamt
European Patent Office
Office européen des brevets

(11) **EP 3 042 433 B1**

(12) **EUROPÄISCHE PATENTSCHRIFT**

(45) Veröffentlichungstag und Bekanntmachung des Hinweises auf die Patenterteilung:
**12.10.2022 Patentblatt 2022/41**

(21) Anmeldenummer: **14747941.4**

(22) Anmeldetag: **06.08.2014**

(51) Internationale Patentklassifikation (IPC):
***H02J 3/32*** (2006.01)   ***H02J 7/34*** (2006.01)
***H02J 3/38*** (2006.01)

(52) Gemeinsame Patentklassifikation (CPC):
**H02J 7/34; H02J 3/32; H02J 3/381;** H02J 2300/20;
H02J 2300/22; Y02B 10/10; Y02E 10/56;
Y02E 70/30

(86) Internationale Anmeldenummer:
**PCT/EP2014/066929**

(87) Internationale Veröffentlichungsnummer:
**WO 2015/032574 (12.03.2015 Gazette 2015/10)**

(54) **VERFAHREN UND VORRICHTUNG ZUR OPTIMIERENDEN BETRIEBSFÜHRUNG FÜR EIN SPEICHERSYSTEM FÜR EIN FOTOVOLTAIKSYSTEM**

METHOD AND APPARATUS FOR OPTIMIZATIONAL MANAGEMENT FOR A MEMORY SYSTEM FOR A PHOTOVOLTAIC SYSTEM

PROCÉDÉ ET DISPOSITIF PERMETTANT LA GESTION OPTIMALE POUR UN SYSTÈME D'ACCUMULATION D'UN SYSTÈME PHOTOVOLTAÏQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2013 DE 102013217572**

(43) Veröffentlichungstag der Anmeldung:
**13.07.2016 Patentblatt 2016/28**

(73) Patentinhaber: **Robert Bosch GmbH**
**70442 Stuttgart (DE)**

(72) Erfinder: **SCHMIEGEL, Armin Uwe**
**22609 Hamburg (DE)**

(56) Entgegenhaltungen:
**US-A1- 2010 179 704    US-A1- 2011 276 269**
**US-A1- 2012 323 386**

EP 3 042 433 B1

**Beschreibung**

Stand der Technik

Die vorliegende Erfindung bezieht sich auf ein Verfahren zur optimierenden Betriebsführung für ein Speichersystem für ein Fotovoltaiksystem, auf eine entsprechende Vorrichtung zur optimierenden Betriebsführung für ein Speichersystem für ein Fotovoltaiksystem, auf ein entsprechendes Fotovoltaiksystem sowie auf ein entsprechendes Computerprogrammprodukt.

Aktuell gibt es zwei Produktgruppen von Fotovoltaik-Speichersystemen: DCgekoppelte Speichersysteme oder AC-gekoppelte Speichersysteme. Alternative Topologien werden diskutiert. Diese Systeme speichern überschüssigen Solarstrom in eine Batterie ein. Die Batterie ist dabei in unterschiedlichen Verhältnissen in Reihe und/oder parallel geschaltet. Bei DC-gekoppelten Systemen bevorzugt man hohe Batteriespannungen, wodurch alle Module eines Speicherblocks in Reihe geschaltet sind, sodass die Gesamtbatteriespannung möglichst nah an der DC-Zwischenkreisspannung liegt. Bei AC-Systemen geht man ebenso vor, wobei man hier vermehrt Kombinationen aus parallel geschalteten Blöcken, die aus in Serie geschalteten Blöcken bestehen, verwendet.

Die grundlegende Funktionsweise ist in allen Fotovoltaik-Speichersystemen die gleiche. Wird Solarstrom produziert, werden zunächst die Verbraucher im Haushalt versorgt. Sobald die Fotovoltaik-Anlage einen Überschuss generiert, wird dieser dazu genutzt, die Batterie zu laden. Gegen Nachmittag ist die Batterie voll und weitere Überschüsse werden ins Netz eingespeist. Am Abend, wenn die Fotovoltaik-Leistung geringer ist, als der Haushaltsverbrauch, wird die Batterie entladen und dient so lange zur Versorgung der Lasten, bis die Batterie leer ist.

Dann wird Strom aus dem Netz bezogen, bis am nächsten Morgen die Sonne wieder genug Strom produziert. Die gängigen Betriebsführungen berücksichtigen weder Systemineffizienzen noch eventuelle Änderungen am Stromnetz oder am Markt.

Die Druckschrift US 2012/0323386 A1 zeigt ein elektrisches Energieversorgungssystem.

Die Druckschrift US 2010/0179704 A1 zeigt eine Optimierung einer Verwendung und Verteilung von Mikronetzenergie.

Offenbarung der Erfindung

Vor diesem Hintergrund wird mit der vorliegenden Erfindung ein Verfahren zur optimierenden Betriebsführung für ein Speichersystem für ein Fotovoltaiksystem, weiterhin eine Vorrichtung zur optimierenden Betriebsführung für ein Speichersystem für ein, die dieses Verfahren verwendet, weiterhin ein entsprechendes Fotovoltaiksystem sowie schließlich ein entsprechendes Computerprogrammprodukt gemäß den Hauptansprüchen vorgestellt.

Vorteilhafte Ausgestaltungen ergeben sich aus den jeweiligen Unteransprüchen und der nachfolgenden Beschreibung.

Ein Fotovoltaiksystem produziert elektrische Energie in Abhängigkeit von der Sonneneinstrahlung. Der Verbrauch der elektrischen Energie ist jedoch unabhängig von der Sonneneinstrahlung. Um dies auszugleichen, kann das Fotovoltaiksystem über ein Energie-Speichersystem verfügen. Durch das Speichersystem kann zu Zeiten hoher Sonneneinstrahlung und geringem Verbrauch zu viel zur Verfügung stehende elektrische Energie zwischengespeichert werden. Neben der Versorgung eines Hausnetzes mit elektrischer Energie durch das Fotovoltaiksystem kann überschüssiger Strom in das Stromnetz eingespeist werden. Dabei steht der Betreiber des Stromnetzes vor der Herausforderung ein stabiles Stromnetz aufzubauen, welches genügend Energie zu jedem Zeitpunkt zur Verfügung stellt. Um dies zu gewährleisten, kann ein Leistungsbedarfsparameter dem Fotovoltaiksystem zur Verfügung gestellt werden, um die Netzeinspeisung bedarfsorientiert zu steuern. Dabei kann der Leistungsbedarfsparameter an ein Bezahlsystem gekoppelt sein. Bei einer optimierenden Betriebsführung des Fotovoltaiksystems bzw. des Speichersystems des Fotovoltaiksystems können verschiedene Betriebsmodi bestimmt werden, um daraus den für das Stromnetz günstigsten Betriebsmodus zu wählen. Unter einem Betriebsmodus können hierbei die verschiedenen Leistungsflüsse zwischen Solarmodul, Speichersystem, Hausnetz und Stromnetz verstanden werden.

Es wird ein Verfahren zur optimierenden Betriebsführung für ein Speichersystem für ein Fotovoltaiksystem vorgestellt, wobei das Fotovoltaiksystem ein Energie-Management-System aufweist, wobei das Fotovoltaiksystem einen Solargenerator, das Speichersystem sowie einen Haushaltsanschluss und einen Netzanschluss umfasst, wobei das Verfahren die folgenden Schritte aufweist:

Einlesen von aktuellen Kenndaten des Fotovoltaiksystems und von erwarteten Kenndaten des Fotovoltaiksystems, wobei die aktuellen Kenndaten Produktionsdaten und/oder Verbrauchswerte und/oder einen Ladezustand des Speichersystems zum aktuellen Zeitpunkt und/oder einen vorangegangenen Ladezustand aus einer Vorperiode repräsentieren, wobei die erwarteten Kenndaten Produktionsdaten und/oder Verbrauchswerte zu zumindest einem zukünftigen Zeitpunkt innerhalb eines vordefinierten Beobachtungszeitraums repräsentieren;

Bestimmen einer Mehrzahl von erwarteten Leistungsflüssen in dem Beobachtungszeitraum unter Verwendung der aktuellen Kenndaten und/oder der erwarteten Kenndaten;

Bestimmen eines bedarfsorientierten Leistungsflusses der Mehrzahl von erwarteten Leistungsflüssen in zumindest einem Zeitintervall innerhalb des vordefinierten Beobachtungszeitraums unter Verwendung zumindest eines der Mehrzahl von erwarteten Leistungsflüssen zuordenbaren Leistungsbedarfsparameters; und

Optimieren der erwarteten Leistungsflüsse unter Verwendung des bedarfsorientierten Leistungsflusses, um eine optimierende Betriebsführung zu erzielen.

Unter einem Fotovoltaiksystem kann ein System verstanden werden, welches Licht Energie in elektrische Energie wandelt. Das Fotovoltaiksystem kann einen Solargenerator, ein Speichersystem sowie ein Energie-Management-System umfassen. Unter dem Solargenerator kann ein Fotovoltaik-Generator oder ein Solarmodul verstanden werden. Dabei kann unter dem Speichersystem ein Energie-Speichersystem, eine Batterie oder ein Akkumulator verstanden werden. Über den Haushaltsanschluss kann ein Haushalt mit elektrischer Energie versorgt werden. Über den Netzanschluss kann das Fotovoltaiksystem mit einem öffentlichen oder globalen Stromnetz verbunden werden. Über den Netzanschluss kann das Fotovoltaiksystem elektrische Energie in das öffentliche Stromnetz einspeisen oder von dort beziehen. Das Energie-Management-System kann ausgebildet sein, die Leistungsflüsse zu steuern. Unter den Produktionsdaten kann eine Information oder ein Signal verstanden werden, welches eine von dem Solargenerator beziehungsweise dem Solarmodul erzeugte elektrische Energie in einem Zeitintervall repräsentiert. Somit kann unter den Produktionsdaten eine von dem Solargenerator bereitgestellte elektrische Leistung verstanden werden. Unter Verbrauchswerten kann eine in einem Zeitintervall verbrauchte elektrische Energie des an das Fotovoltaiksystem angeschlossenen Haushalts verstanden werden. Der Ladezustand des Speichersystems kann in einem Bereich zwischen null und der maximalen Kapazität des Speichersystems variieren. Unter dem vordefinierten Beobachtungszeitraum kann eine Zeitspanne innerhalb eines Zeitraums zwischen dem aktuellen Zeitpunkt und einem Zeitpunkt in der Zukunft der zwischen wenigen Stunden und ein, zwei oder drei oder mehr Tagen liegen kann verstanden werden. Der vordefinierte Beobachtungszeitraum kann in gleich große oder unterschiedlich große Zeitintervalle geteilt werden, die für die optimierende Betriebsführung genutzt werden. Unter einer optimierenden Betriebsführung kann eine bedarfsorientierte Betriebsführung oder eine auf eine globale Netzstabilität optimierte Betriebsführung verstanden werden. Dabei kann unter einem Leistungsbedarfsparameter eine Kennzahl verstanden werden. Der Leistungsbedarfsparameter kann in unterschiedlichen Zeitintervallen variieren. Dabei kann der Leistungsbedarfsparameter an ein Bezahlsystem bzw. an einen monetären Ertrag als Kenngröße gekoppelt sein.

In einer Ausführungsform können die Kenndaten eine am Solargenerator abrufbare Leistung $P_t$ und/oder eine in der Batterie gespeicherte Leistung und/oder von der Batterie abrufbare Leitung $S_t$ und/oder eine zur Versorgung der Verbraucher benötigte Leistung $L_t$ und/oder eine Leistung $G_t$, die in ein Netz eingespeist oder aus dem Netz abgerufen wird, repräsentieren, wobei die aktuellen Kenndaten Daten zu einem aktuellen und/oder vergangenen Zeitintervall und die erwarteten Kenndaten Daten zu einem zukünftigen Zeitintervall in dem Beobachtungszeitraum repräsentieren. Durch die Kenndaten kann das Fotovoltaiksystem einfach beschrieben werden.

In einem Schritt des Ausgebens kann ein Steuersignal ausgegeben werden. Dabei kann das Steuersignal ausgebildet sein, den Energiefluss zwischen den Komponenten des Fotovoltaiksystems entsprechend dem im Schritt (1030) des Wählens gewählten Energieflusses zu steuern. Über das Steuersignal kann der Energiefluss beziehungsweise die Energieflüsse zwischen den Komponenten des Fotovoltaiksystems gesteuert werden. Das Steuersignal kann die Verteilung der elektrischen Leistung beziehungsweise der elektrischen Energie in dem Fotovoltaiksystem steuern. Somit kann das Steuersignal geeignet sein, die entsprechende Betriebsführung zu implementieren oder das Fotovoltaiksystem entsprechend der energieeffizienten Betriebsführung zu steuern.

Ferner können im Schritt des Bestimmens die erwarteten Leistungsflüsse unter Verwendung je eines einem erwarteten Leistungsfluss zuordenbaren Wirkungsgrad bestimmt werden. Der Wirkungsgrad der Energieübertragung zwischen den einzelnen Komponenten des Fotovoltaiksystems bzw. der einzelnen Komponenten des Fotovoltaiksystems selbst kann die Menge der bereitgestellten elektrischen Energie beeinflussen. Dabei kann elektrische Energie in Wärme gewandelt werden. Der Übertragung von Leistung zwischen den einzelnen Komponenten des Fotovoltaiksystems bzw. einzelnen Komponenten des Fotovoltaiksystems kann ein Wirkungsgrad zugeordnet werden.

Günstig ist es auch, wenn im Schritt des Einlesens die erwarteten Kenndaten von einer Prognoseeinheit eingelesen werden. Dabei kann die Prognoseeinheit Teil des Energie-Management-Systems sein. Alternativ kann die Prognoseeinheit abgesetzt von dem Fotovoltaiksystem sein und über eine Kommunikationsschnittstelle die erwarteten Kenndaten bereitstellen. Bei der Prognoseeinheit kann es sich um eine ideale Prognoseeinheit handeln. Die Prognoseeinheit kann erwartete Produktionsdaten und gleichzeitig oder alternativ erwartete Verbrauchswerte bereitstellen.

In einer Ausführungsform können ferner im Schritt des Einlesens die erwarteten Kenndaten Produktionsdaten und ergänzend oder alternativ Verbrauchswerte von einem ersten Zeitintervall und zumindest einem zeitlich dem ersten Zeitintervall nachfolgenden zweiten Zeitintervall innerhalb des vordefinierten Beobachtungszeitraums repräsentieren und gleichzeitig oder alternativ im Schritt des Bestimmens des bedarfsorientierten Leistungsflusses die Mehrzahl von erwarteten Leistungsflüssen für eine Mehrzahl von Zeitintervallen innerhalb des vordefinierten Beobachtungszeitraums bestimmt werden. Der vordefinierte Beobachtungszeitraum kann in eine Mehrzahl von Zeitintervallen unterteilt werden. Dabei kann ein Zeitintervall beispielsweise einen Zeitraum von 15 Minuten oder alternativ 30 Minuten, oder alternativ 60 Minuten, oder alternativ zwei Stunden oder alternativ sechs Stunden umfassen. Dabei können erwartete Kenndaten zu einer Mehrzahl von Zeitintervallen oder zu allen Zeitintervallen innerhalb des Beobachtungszeitraums zugeordnet werden. Dadurch kann eine an verschiedene Tageszeiten angepasste Prognose und somit eine an verschiedene Tageszeiten angepasste Betriebsführung erzielt werden.

Ferner können im Schritt des Bestimmens der Mehrzahl von erwarteten Leistungsflüssen Leistungsflüsse für eine Mehrzahl von Zeitintervallen in dem Beobachtungszeitraum bestimmt werden. In einem Zeitintervall können verschiedene Varianten für die Leistungsflüsse zwischen den Komponenten des Fotovoltaiksystems bestimmt werden. Dies kann für eine Mehrzahl von Zeitintervallen wiederholt werden.

Günstig ist es auch, wenn in einer Ausführungsform im Schritt des Bestimmens eines bedarfsorientierten Leistungsflusses je ein Leistungsbedarfsparameter einem Zeitintervall innerhalb des vordefinierten Beobachtungszeitraums zugeordnet ist.

Die durch die optimierende Betriebsführung bestimmten Energieflüsse sorgen für elektrische Energie für elektrische Verbraucher am Haushaltsanschluss sowie für ein stabiles Stromnetz am Netzanschluss. Hierzu wird elektrische Energie in dem Speichersystem gepuffert. Unter einem stabilen Stromnetz kann dabei eine Frequenzhaltung verstanden werden. Dabei kann die Frequenzhaltung des Stromnetzes unter Verwendung des Leistungsbedarfsparameters verbessert werden.

Die vorliegende Erfindung schafft ferner eine Vorrichtung zur optimierenden Betriebsführung für ein Speichersystem für ein Fotovoltaiksystem, die ausgebildet ist, um die Schritte einer Variante eines hier vorgestellten Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Es wird ein Fotovoltaiksystem mit einem Solargenerator und/oder einem Speichersystem und/oder einem Energie-Management-System und einer Vorrichtung zur optimierenden Betriebsführung für das Speichersystem vorgestellt.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Ein Aspekt der vorliegenden Erfindung ist das Berücksichtigen von Systemineffizienzen sowie eventuelle Änderungen am Markt. Somit kann bei einer Änderung der ökonomischen Rahmenbedingungen, wie beispielsweise Einspeisetarife oder Strombezugskosten, die Betriebsführung das System optimal betreiben und so zusätzliche Erträge realisieren. So kann die Realisierung von Arbitragegewinnen, die sich durch zeitlich variierende Stromtarife ergeben, ermöglicht werden. Gleichzeitig kann die Stabilität des Stromnetzes verbessert werden, beziehungsweise die Verfügbarkeit von elektrischer Energie entsprechend der Nachfrage verbessert werden. Es kann eine zeitliche Betrachtung der Leistungs- und Energieflüsse durchgeführt werden. Dabei können Prognosen in die Regelung eingebunden werden. Ein Aspekt der vorgestellten Erfindung ist es, das Systemverhalten unter Berücksichtigung dieser Prognose zu optimieren. Hierzu kann dem Energie-Management-System (EMS) eine Prognoseeinheit bereitgestellt werden. Durch die Einbindung der Prognose kann der Energie-Speicher effektiver genutzt werden. Dies kann zu einer schonenderen Beladestrategie und Entladestrategie führen. Weiterhin können höhere Erträge erzielt werden, da die Betriebsführung zwischen Erträgen durch Mehreinspeisung und Erträgen durch Stromkostenvermeidung abwägen kann.

Die Erfindung wird nachstehend anhand der beigefügten Zeichnungen beispielhaft näher erläutert. Es zeigen:

Fig. 1          eine schematische Darstellung eines Fotovoltaiksystems gemäß einem Ausführungsbeispiel der vorliegenden Erfindung;

Fig. 2          eine schematische Darstellung eines Fotovoltaiksystems mit einem Speichersystem als DC-System;

Fig. 3a und 3b      eine schematische Darstellung eines Fotovoltaikspeichersystems als AC-System;

Fig. 4      eine schematische Darstellung eines Fotovoltaikspeichersystems als DC-System;

Fig. 5a bis 5d      eine schematische Darstellung einer Funktionsweise eines Fotovoltaiksystems gemäß einem Ausführungsbeispiel der vorliegenden Erfindung;

Fig. 6      eine Darstellung eines Fotovoltaik-Speichersystems mit DC-Topologie gemäß einem Ausführungsbeispiel der vorliegenden Erfindung;

Fig. 7      eine schematische Darstellung von Leistungsflüssen und Energieflüssen eines Fotovoltaik-Speichersystems gemäß einem Ausführungsbeispiel der vorliegenden Erfindung;

Fig. 8a bis 8c      eine Darstellung von Kurvenverläufen von Energieflüssen bei Verwendung einer optimierenden Betriebsführung gemäß einem Ausführungsbeispiel der vorliegenden Erfindung;

Fig. 9      ein Ablaufdiagramm eines Verfahrens gemäß einem Ausführungsbeispiel der vorliegenden Erfindung; und

Fig. 10      ein Blockschaltbild einer Vorrichtung gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

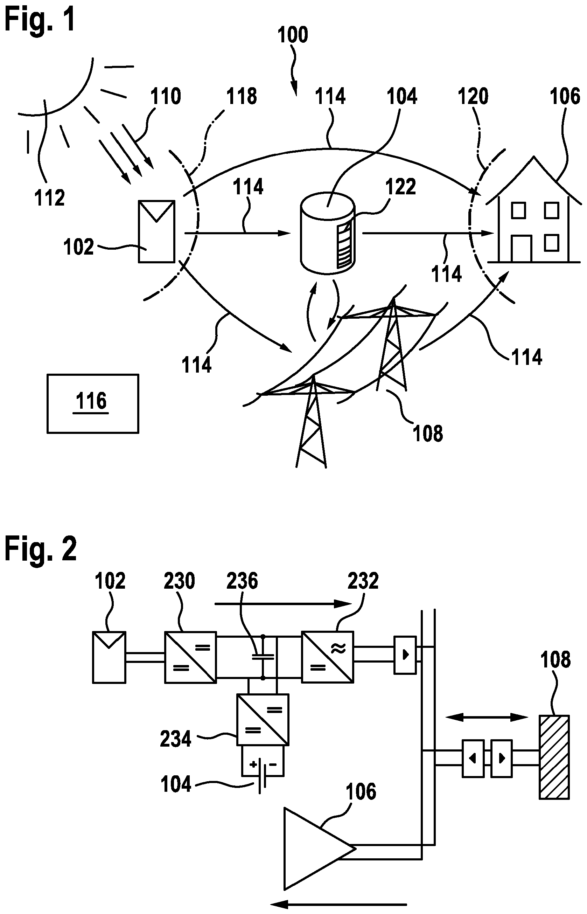

Fig. 1 zeigt eine schematische Darstellung eines Fotovoltaiksystems 100 gemäß einem Ausführungsbeispiel der vorliegenden Erfindung. Das Fotovoltaiksystem 100 umfasst zumindest einen Solargenerator 102, ein Speichersystem 104, einen Haushaltsanschluss 106 mit nicht dargestellten elektrischen Verbrauchern sowie einen Netzanschluss 108 zum Anschluss an ein globales Stromnetz. Der Solargenerator 102 ist ausgebildet, Licht 110 in der Sonne 112 in elektrische Energie zu wandeln und diese elektrische Energie im Fotovoltaiksystem 100 bereitzustellen. Pfeile zeigen einen möglichen Leistungsfluss 114 beziehungsweise Energiefluss 114 zwischen den genannten Komponenten des Fotovoltaiksystems 100. Der Solargenerator 102 ist verbunden mit dem Haushaltsanschluss 106, dem Netzanschluss 108 sowie dem Speichersystem 104; somit ist ein Leistungsfluss 114 vom Solargenerator 102 zu dem Speichersystem 104, zu dem Haushaltsanschluss 106 sowie dem Netzanschluss 108 vorgesehen bzw. möglich. Das Speichersystem 104 ist weiterhin verbunden mit dem Haushaltsanschluss 106 sowie dem Netzanschluss 108. Das Speichersystem 104 ist ausgebildet, vom Solargenerator 102 oder über den Netzanschluss 108 bereitgestellte elektrische Energie zu speichern sowie an den Haushaltsanschluss 106 sowie den Netzanschluss 108 gespeicherte elektrische Energie abzugeben. Der Netzanschluss 108 ist weiterhin verbunden mit dem Haushaltsanschluss 106 und ausgebildet einen Leistungsfluss 114 vom Netzanschluss 108 zum Haushaltsanschluss 106 zu ermöglichen. Das Fotovoltaiksystem 100 weist weiterhin ein Energie-Management-System 116 auf, welches ausgebildet ist, die Leistungsflüsse 114 zwischen den Komponenten des Fotovoltaiksystems 100 zu steuern. Weiterhin ist das Energie-Management-System 116 ausgebildet, die Produktionsdaten 118 des Solargenerators 102, die Verbrauchswerte 120 am Haushaltsanschluss 106 sowie den Ladezustand 122 des Speichersystems 104 zu überwachen.

In einem Ausführungsbeispiel weist das Energie-Management-System 116 eine nicht dargestellte Prognoseeinheit auf.

Fig. 2 zeigt eine schematische Darstellung eines Fotovoltaiksystems 100 mit einem Speichersystem 104. Bei dem Fotovoltaiksystem 100 kann es sich um ein Ausführungsbeispiel des in Fig. 1 gezeigten Fotovoltaiksystems 100 handeln. Das Fotovoltaiksystem 100 umfasst einen Solargenerator 102, einen Fotovoltaik-Laderegler 230, einen Wechselrichter 232, einen Batterieladeregler 234 sowie ein Speichersystem 104. Der Solargenerator 102 ist über den Fotovoltaik-Laderegler 230 mit dem Wechselrichter 232 verbunden. Das über den Batterieladeregler 234 angebundene Speichersystem 104 greift in der Verbindung zwischen dem Fotovoltaik-Laderegler 230 und dem Wechselrichter 232 in das System ein. Zwischen den beiden Verbindungsleitungen zwischen dem Fotovoltaik-Laderegler 230 und dem Wechselrichter 232 ist ein Kondensator 236 angeordnet. Der Wechselrichter 232 ist über einen Übergabepunkt mit dem Haushaltsanschluss 106 sowie dem Netzanschluss 108 verbunden, wobei auch der Netzanschluss 108 über einen dedizierten Übergabepunkt angebunden ist.

Der Fotovoltaik-Laderegler 230 kann als ein MPP-Tracker verstanden werden, der ausgebildet ist, die Belastung des Solargenerators 102 für optimale Energieausbeute zu optimieren. Der Fotovoltaik-Laderegler 230 ist ausgebildet, den Solargenerator 102 im Leistungsmaximum oder Maximum Power Point zu betreiben. Unter einem Solargenerator 102 kann ein Solarmodul 102 oder eine Solarzelle 102 verstanden werden.

In dem in Fig. 2 dargestellten Ausführungsbeispiel fließt Strom von dem Solarmodul 102 über den Fotovoltaik-Laderegler 230 und dem Wechselrichter 232 in Richtung des Haushaltsanschlusses 106 sowie des Netzanschlusses 108. Somit kann der Haushaltsanschluss 106 von dem Solarmodul 102 bzw. dem Speichersystem 104 mit Strom versorgt werden sowie Strom über den Netzanschluss 108 eingespeist werden. Gleichzeitig oder alternativ kann der Haushalt Strom über den Netzanschluss 108 beziehen.

Gezeigt wird ein Betrieb eines DC-Systems. Der Wechselrichter 232 wird entsprechend der im Haushalt 106 vorhandenen Lasten geregelt und speist nur so viel Leistung ins Netz, wie aktuell verbraucht wird.

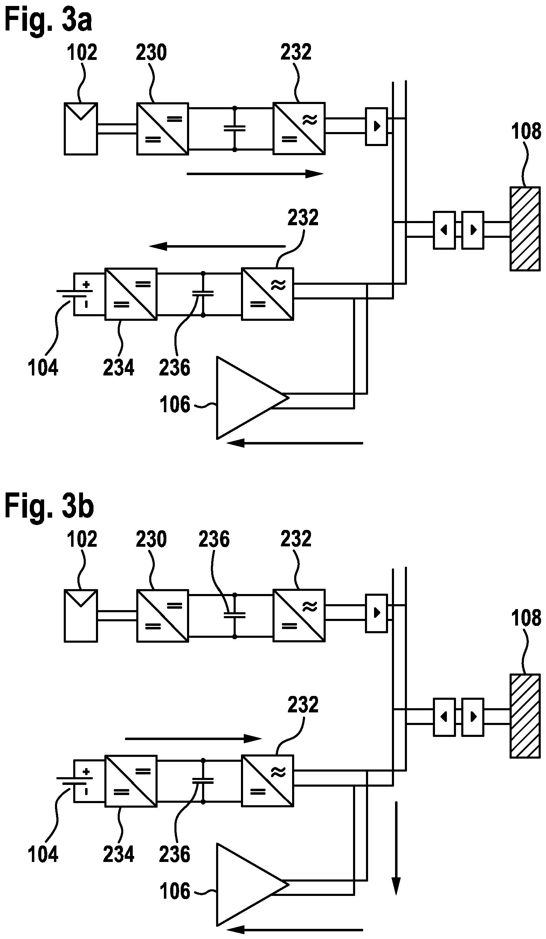

Fig. 3a und Fig. 3b zeigen eine schematische Darstellung eines Fotovoltaikspeichersystems 100 als AC-System. Bei dem Fotovoltaiksystem 100 kann es sich um ein Ausführungsbeispiel des in Fig. 1 gezeigten Fotovoltaiksystems 100 handeln. Das Fotovoltaiksystem 100 umfasst einen Solargenerator 102, einen Fotovoltaik-Laderegler 230, zwei Wechselrichter 232, einen Batterieladeregler 234 sowie ein Speichersystem 104. Der Solargenerator 102 ist über den Fotovoltaik-Laderegler 230 mit dem ersten der zwei Wechselrichter 232 verbunden. Das Speichersystem 104 ist über den Batterieladeregler 234 mit dem zweiten der zwei Wechselrichter 232 verbunden. Die zwei Wechselrichter 232 der Haushaltsanschluss 106 sowie der Netzanschluss 108 sind miteinander verbunden. In Fig. 3a zeigen Pfeile den Zustand des Ladens des Fotovoltaiksystems 100 an. Im Vergleich dazu zeigen in Fig. 3b Pfeile den Eigenverbrauch bei einem Nulleinspeiser an. In Fig. 3a liefert der Solargenerator 102 Strom, welcher zum Speichersystem 104 sowie zum Haushaltsanschluss 106 geleitet wird. In Fig. 3b wird der Haushaltsanschluss 106 über das Speichersystem 104 mit Strom versorgt.

Der Eigenverbrauch erfolgt über die Be- und Entladung der Batterie unabhängig davon, ob im Haushalt Strom genutzt wird oder nicht. Die Entladung der Batterie erfolgt bei einem Nulleinspeiser darüber, dass Verbraucher direkt vom Speichersystem aus versorgt werden. Eine Auslegung als Volleinspeiser ist ebenso möglich. Dann ist der Betrieb analog zum DC-System zu sehen.

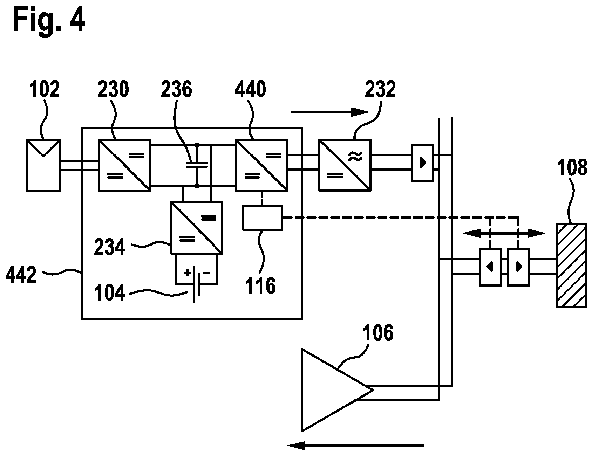

Fig. 4 zeigt eine schematische Darstellung eines Fotovoltaikspeichersystems als DC-System. Bei dem Fotovoltaiksystem 100 kann es sich um ein Ausführungsbeispiel des in Fig. 1 gezeigten Fotovoltaiksystems 100 handeln. Das Fotovoltaiksystem 100 umfasst einen Solargenerator 102, einen Fotovoltaik-Laderegler 230, einen Wechselrichter 232, einen Batterieladeregler 234, ein Speichersystem 104 sowie einen virtuellen Solargenerator 440 bzw. virtuellen Fotovoltaik-Generator 440. Der Fotovoltaik-Laderegler 230 bildet zusammen mit dem virtuellen Solargenerator 440 sowie dem Batterieladeregler 234 dem Speichersystem 104 sowie einem Energie-Management-System 116 ein PV-DC-System 442. Der virtuelle Solargenerator 440 ist vor den Wechselrichter 232 geschaltet und wie der Übergabepunkt zum Netzanschluss 108 mit dem Energie-Management-System 116 verbunden.

Mit anderen Worten zeigt Fig. 4 eine schematische Darstellung eine PV-DC-Systems 442. Das System 442 wird zwischen einem Wechselrichter 232 und einer PV-Anlage bzw. einem Solargenerator 102 installiert. Das System 442 verfügt über einen eigenen MPP-Tracker 230, um den optimalen Arbeitspunkt des Solargenerators 102 einzustellen. Der Batterieladeregler 234 dient zur Be- und Entladung der Batterie 104. Der virtuelle Fotovoltaik-Generator 440, auch kürzer als virtueller PV-Generator 440 bezeichnet, erzeugt eine UI-Kennlinie (Strom-Spannungs-Kennlinie), die einem PV-Generator mit einer Zielleistung entspricht, sodass der ursprüngliche Wechselrichter sich auf die Zielleistung einregelt.

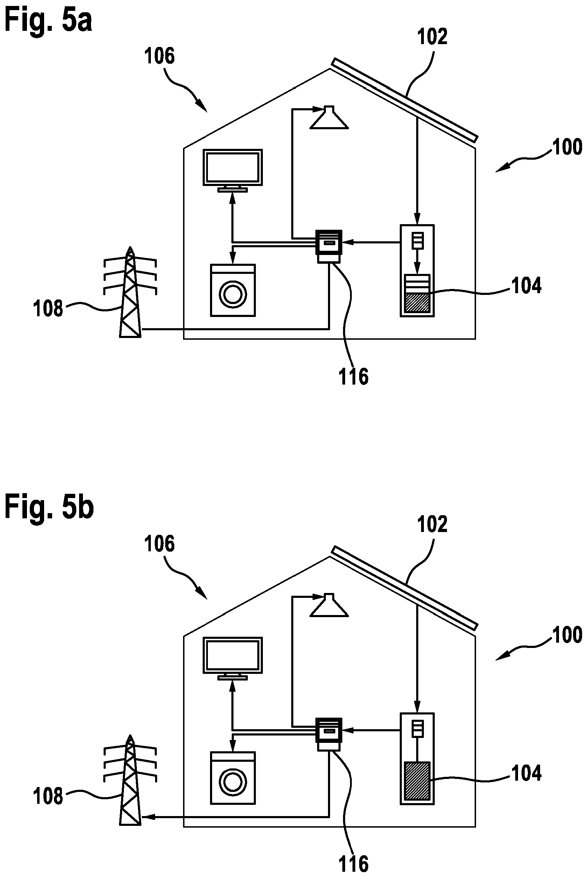

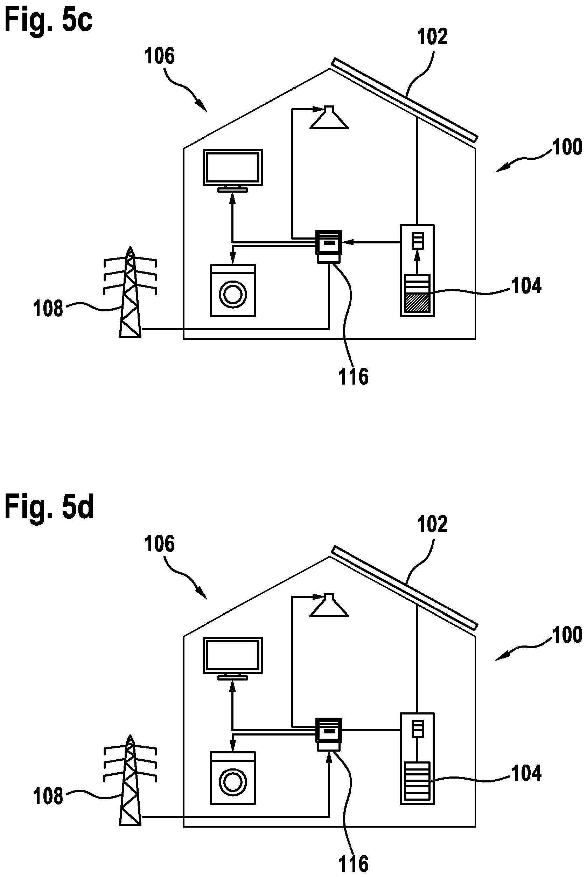

Fig. 5a bis 5d zeigen eine schematische Darstellung einer Funktionsweise eines Fotovoltaiksystems 100 gemäß einem Ausführungsbeispiel der vorliegenden Erfindung. Bei dem Fotovoltaiksystem 100 kann es sich um ein Ausführungsbeispiel des in Fig. 1 gezeigten Fotovoltaiksystems 100 handeln. Auf dem Dach eines Hauses ist ein Solargenerator 102 angeordnet. Ein Energie-Management-System 116 koppelt das Fotovoltaiksystem 100 den Haushaltsanschluss 106 mit seinen elektrischen Verbrauchern sowie den Netzanschluss 108 und steuert dabei das Fotovoltaiksystem 100 mit dem dort angeordneten Speichersystem 104. die Figuren 5a bis 5d zeigen die Funktionsweise zu verschiedenen Tageszeiten bzw. nachts. So zeigen beispielhaft Fig. 5a die Funktionsweise am Vormittag, Fig. 5b die Funktionsweise am Nachmittag, Fig. 5c die Funktionsweise am Abend sowie Fig. 5d die Funktionsweise während der Nacht. In Fig. 5a wird die im Fotovoltaik Generator 102 produzierte Energie vormittags zur Optimierung des Eigenverbrauchs genutzt. Überschüssige Energie wird zum Aufladen der integrierten Lithiumsionen-Batterie 104 genutzt. Fig. 5b zeigt bei voll aufgeladen Batterien, dass das System den Eigenverbrauch versorgt und überschüssige Energie ins Stromnetz einspeist. Am Abend wird wie in Fig. 5c dargestellt nach Sonnenuntergangenergie aus der Batterie zur Verfügung gestellt. Bei dem gezeigten Ausführungsbeispiel sind Eigenverbrauchsquoten von 70 % und mehr zu erreichen. In Fig. 5d ist ein Zustand in der Nacht gezeigt, bei dem die Kapazität der Batterie nicht ausreicht, um den Eigenverbrauch abzudecken, sodass Strom aus dem öffentlichen Netz bezogen wird, um den Stromverbrauch zu decken.

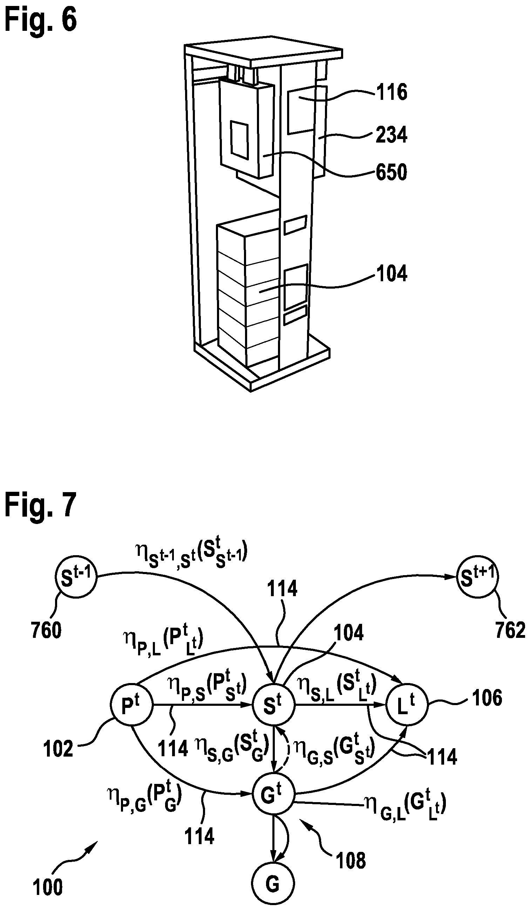

Fig. 6 zeigt eine Darstellung eines Fotovoltaik-Speichersystems mit DC-Topologie gemäß einem Ausführungsbeispiel der vorliegenden Erfindung. Das System umfasst ein Energiemanagementsystem 116 einen Batterieladeregler 234, einen Stringinverter 650 sowie ein Speichersystem 104, welches in dem gezeigten Ausführungsbeispiel als eine Lithium-Ionen-Batterie mit 4-6 Modulen ä 2,2 kWh ausgebaut ist. Dabei umfasst das Speichersystem 104 weiterhin ein Batteriemanagementmodul, eine CanOpen-Buskommunikation sowie eine Einrichtung zum Schutz der Batterie.

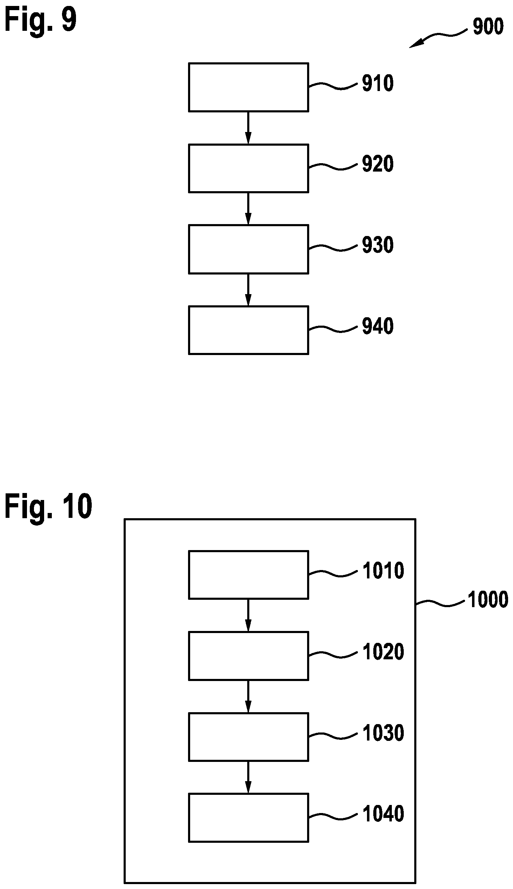

In Fig. 6 ist ein PV-Speichersystem 100 dargestellt. Das beispielsweise in Fig. 9 dargestellte Verfahren ist in einer Steuereinheit, hier dem Energie Management-System116, integriert. Bei nicht integrierten Systemen kann diese Steuereinheit auch ein externes Gerät sein. Dabei ist es unerheblich, ob das System in unmittelbarer Nähe zum Gerät, oder über eine Kommunikationsverbindung , beispielsweise eine Internetverbindung, an einem anderen Ort installiert ist. Zur Realisierung des Verfahrens muss sichergestellt sein, dass das Energie-Management-System Informationen zum aktuellen Verbrauch und zur Produktion erhält.

Fig. 7 zeigt eine schematische Darstellung von Leistungsflüssen 114 und Energieflüssen eines Fotovoltaiksystems 100 gemäß einem Ausführungsbeispiel der vorliegenden Erfindung. Bei dem Fotovoltaiksystem 100 kann es sich um ein Ausführungsbeispiel des in Fig. 1 gezeigten Fotovoltaiksystems 100 handeln. Das Fotovoltaiksystem 100 umfasst einen Solargenerator 102, ein Speichersystem 104, einen Haushaltsanschluss 106 sowie einen Netzanschluss 108. Zwischen den Komponenten des Fotovoltaiksystems 100 sind Leistungsflüsse 114 dargestellt. Die einzelnen Komponenten des Fotovoltaiksystems 100 sowie die Leistungsflüsse lassen sich mathematisch beschreiben.

Fig. 7 stellt die Leistungs- und Energieflüsse eines PV-Speichersystems dar. Produktion repräsentiert durch Produktionsdaten 118, und Haushaltsverbrauch, repräsentiert durch Verbrauchswerte 120, sowie der Energiefluss des Speichers 104 aus der Vorperiode 760, sind jeweils vorgegeben. Im Folgenden wird die Realisierung eines Ausführungsbeispiels eines erfindungsgemäßen Verfahrens beschrieben. Unabhängig von der verwendeten Topologie kann die Funktionsweise eines PV-Speichersystems 100 durch seine Leistungs- und Energieflüsse 114 beschrieben werden. In Fig. 7 ist der zugrunde liegende Graph dargestellt. Es werden in diesem Fall vier Knoten $P^t$, $S^t$, $L^t$, $G^t$ benötigt, die die verschiedenen Komponenten 102, 104, 106, 108 des Systems beschreiben:

$P^t$: Stellt die zum Zeitpunkt t am PV-Generator abrufbare Leistung dar.

$S^t$: Stellt die zum Zeitpunkt t in die Batterie gespeicherte oder aus der Batterie abrufbare Energie dar.

$L^t$: Entspricht der zum Zeitpunkt t benötigte Leistung zur Versorgung der Verbraucher in einem Haushalt.

$G^t$: Repräsentiert die Leistung, die in das Netz gespeist oder vom Netz abgerufen wird.

Da kein verlustfreier Leistungstransport möglich ist, müssen diese Verluste ebenfalls ins Model integriert werden. Dies erfolgt durch den jeweiligen Wirkungsgrad von *x* nach *y* und wird als $\eta_{x,y}(M)$ beschrieben. Dabei beschreibt M die Menge der transportierten Leistung. Es gilt

$$\eta_{x,y}(M) \in [0,1] \tag{1}$$

Im Rahmen der Modellierung wird vereinbart, dass die Leistungsverluste stets erst beim Energie- bzw. Leistungsempfänger berücksichtigt werden. Zur Erhaltung der Übersichtlichkeit wird das Argument *M* in den folgenden Formeln nicht mitgeschrieben, wenn aus dem Zusammenhang ersichtlich ist, welche Leistungsmenge anzusetzen ist. $P^t$ stellt die zum Zeitpunkt t bereitgestellte Leistung des PV-Generators dar. Grundsätzlich besteht die Möglichkeit nicht die gesamte mögliche Leistung in Anspruch zu nehmen, das heißt, der Wechselrichter kann die Leistung des PV-Generators abregeln.

$$P_{S^t}^t$$

ist der Leistungsfluss vom Generator zum Speicher,

$$P_{L^t}^t$$

der Leistungsfluss vom Generator zu den Verbrauchern im Haushalt und

$$P_G^t$$

den Leistungsfluss vom Generator ins Netz.

$$\left(P_{S^t}^t + P_{L^t}^t + P_G^t\right) \leq P^t \tag{2}$$

Die Leistungs- und Energieflüsse zum Speicher werden wie folgt beschrieben:

$$\eta_{PS}\, P_{S^t}^t + \eta_{GS} G_{S^t}^t + \frac{\eta_{St-1\,S^t}\, S^{t-1}}{\Delta t} - \left(\frac{S^{t+1}}{\Delta t} + S_{G^t}^t + S_{L^t}^t\right) = 0 \tag{3}$$

Der Speicher erhält aus der PV-Anlage die Leistung

$$P_{S^t}^t.$$

Zusätzlich kann der Speicher aus dem Netz mit der Leistung

$$G_{S^t}^t$$

geladen werden. Die Tatsache, dass ein Speicher bereits geladen sein kann, wird durch den dritten Term modelliert. $S^{t-1}$ stellt jene Energie dar, mit der der Speicher in der Vergangenheit geladen wurde. Der Wirkungsgrad $\eta_{St-1S}^t$ repräsentiert somit die Selbstentladung des Speichers. Die Entladung der Batterie kann zum darüber erfolgen, dass Leistung ins Netz eingespeist

$$S_{G^t}^t$$

oder zur Deckung der Verbraucher

$$S_{L^t}^t$$

verwendet wird. Der Rest der zur Verfügung stehenden Leistung wird in den zukünftigen Speicher $S^{t+1}$ überführt.

Der Hausverbrauch ist zum aktuellen Zeitpunkt $L^t$ voll zu decken. Dies kann durch Leistungsaufnahme aus dem Netz

$$G_{L^t}^t,$$

direkt aus der PV-Anlage

$$P_{L^t}^t$$

oder dem Speicher

$$S_{L^t}^t$$

geschehen:

$$L^t - \left(G_{L^t}^t + \eta_{PL} P_{L^t}^t + \eta_{SL} S_{L^t}^t\right) = 0 \tag{4}$$

Für den Netzknoten gilt, dass er jene Leistung aufnimmt oder abgibt, die vom Speicher, der PV-Anlage oder dem Haushalt eingespeist, bzw. aufgenommen wird. Er kann jeden beliebigen Wert annehmen, solange die Netzanschlussleistung $AC_{max}$ nicht überschritten wird. Es gilt

$$-AC_{max} \leq \eta_{P,G}P_G^t + \eta_{S,G}S_{G^t}^t - G_{L^t}^t - G_{S^t}^t \leq AC_{max} \qquad (5)$$

Dabei kann auf vertragliche, gesetzliche oder technische Aspekte Rücksicht genommen werden. Im folgenden wird, analog zum deutschen Energieeinspeisegesetz (EEG 2012) für PV-Anlagen, mit einer installierten Leistung bis 15kVA, angenommen, dass der Nettofluss am Anschlusspunkt nicht mehr als 70% der installierten Leistung $P_{inst}$ betragen darf. Aus diesem Grund muss die Gleichung für die Anschlussbedingung (5) modifiziert werden:

$$-AC_{max} \leq \eta_{P,G}P_G^t + \eta_{S,G}S_{G^t}^t - G_{L^t}^t - G_{S^t}^t \leq 70\%P_{inst} \qquad (6)$$

Die Flussgleichungen zum Zeitpunkt t lassen sich somit folgend zusammenfassen: für die Produktionsgleichung

$$P_{s^t}^t + P_{L^t}^t + P_G^t \leq \tilde{P}^t,$$

für die Speichergleichung

$$\eta_{PS}P_{S^t}^t + \eta_{GS}G_{S^t}^t + \frac{\eta_{S^{t-1}S^t}S^{t-1}}{\Delta t} - \left(\frac{S^{t+1}}{\Delta t} + S_{G^t}^t + S_{L^t}^t\right) = 0,$$

für die Verbrauchsgleichung

$$L^t - \left(G_{L^t}^t + \eta_{PL}P_{L^t}^t + \eta_{SL}S_{L^t}^t\right) = 0$$

sowie für die Netzgleichung

$$-AC_{max} \leq \eta_{P,G}P_G^t + \eta_{S,G}S_{G^t}^t - G_{L^t}^t - G_{S^t}^t \leq 70\%P_{inst}.$$

Für die Knoten gelten unterschiedliche Wertebereiche. Die PV Produktion ist positiv, aber auf die Größe der PV-Anlage $PV_{max}$ [kW] limitiert.

$$P^t \in [0, PV_{max}] \qquad (7)$$

Auch die Speicherkapazität ist stets positiv, hier liegt die Limitierung an der Gesamtkapazität $K_S$[kWh].

$$S^t \in [0, K_S] \qquad (8)$$

Es wird angenommen, dass keine weiteren Erzeugungseinheiten im Haushalt vorhanden sind, d. h. keine weiteren PV-Anlagen oder kleinere Blockheizkraftwerke. In diesem Fall gilt für den Verbrauch lediglich:

$$L^t \geq 0 \qquad (9)$$

Mit diesen Angaben ist das mathematische Problem vollständig beschrieben. Zur Lösung zu einem bestimmten Zeitpunkt t, sind lediglich die aktuelle PV-Produktion, der Verbrauch, sowie der aus der Vergangenheit stammende Wert für den Speicherinhalt noch notwendig.

Die Stromnetze müssen entsprechend der Nachfrage Strom bereitstellen können. Hierzu muss genug Strom produziert beziehungsweise bereitgestellt werden. Ein Wert, die Angebot und Nachfrage beschreibt, kann als Leistungsbedarfsparameter bezeichnet werden. Es zeigt sich, dass die Entlohnung für eingespeisten Strom, das heißt, also die Einspeisevergütung und auf der anderen Seite die Strombezugskosten ein idealer Wert als Leistungsbedarfsparameter sind. Somit bietet eine wirtschaftliche Optimierung gleichzeitig eine technische Optimierung entsprechend Angebot und Nachfrage beziehungsweise zur Herstellung eines stabilen Stromnetzes.

Für wirtschaftliche Optimierung der Betriebsführung ist es notwendig, die dargestellten Leistungs- und Energieflüsse monetär zu bewerten. So kann eine Entscheidung über die Verteilung der zur Verfügung stehenden Leistung getroffen werden. Die Entscheidung über einen bestimmten Leistungsfluss wird für ein bestimmtes Zeitintervall $\Delta t$ getroffen. Hieraus ergibt sich eine Energiemenge, die transferiert wird.

Die Kosten und Einnahmen für die verschiedenen Leistungs- und Energieflüsse lassen sich einzeln darstellen. Kosten entstehen zum einen durch Leistungsverluste und zum anderen durch den Ankauf von Strom. Die Leistungsverluste sind in einen konstanten Anteil $\nu_{X,Y}$ und in einen in $P_Y$ linearen Anteil $\kappa_{X,Y}$ aufgeteilt. Dieser kann durch Terme in denen $P_Y$ in höherer Ordnung stehen, beispielsweise quadratisch, erweitert werden. In diesem Falle handelt es sich dann um eine Erweiterung auf ein nichtlineares Problem.

Eine Besonderheit stellt die Kostenbewertung von $G_S^t$ dar. Hier werden die Stromkosten zweifach bewertet. Dies wird notwendig, da ansonsten die vermiedenen Stromkosten, die bei einer Endladung der Batterie als Gewinn bewertet würden, die Stromkosten beim Laden der Batterie kompensieren würden. Diese fehlerhafte Verrechnung von Opportunitätskosten mit realen Kosten macht die zweifache Bewertung notwendig.

Für den Leistungsfluss

$$P_G^t \mid$$

können die Kosten mit

$$:-c_i^t \left( \nu_{PG} + \kappa_{PG} P_G^t \right) \Delta t$$

und die Einnahmen mit

$$c_i^t P_G^t \, \Delta t$$

angesetzt werden. Für den Leistungsfluss

$$P_S^t$$

können die Kosten mit

$$-c_{gc}^t \left( \nu_{PS} + \kappa_{PS} P_S^t \right) \Delta t$$

angesetzt werden. Für den Leistungsfluss

$$P_L^t$$

können die Kosten mit

$$-c_{gc}^t \left( \nu_{PL} + \kappa_{PL} P_L^t \right) \Delta t$$

und die Einnahmen mit

$$c_{gc}^t P_L^t \Delta t$$

angesetzt werden. Für den Leistungsfluss

$$S_L^t$$

können die Kosten mit

$$-c_{gc}^t \left( v_{SL} + \kappa_{SL} \, S_L^t \right) \Delta t$$

und die Einnahmen mit

$$c_{gc}^t S_L^t \Delta t$$

angesetzt werden. Für den Leistungsfluss

$$S_G^t$$

können die Kosten mit

$$-c_i^t \left( v_{SG} + \kappa_{SG} S_G^t \right) \Delta t$$

und die Einnahmen mit

$$c_i^t S_G^t \, \Delta t$$

angesetzt werden. Für den Leistungsfluss $S^{t+1}$ können die Kosten mit

$$- c_{gc}^t \left( v_{SS} + \kappa_{SS} S^{t+1} \right)$$

und die Einnahmen mit

$$c_{gc}^t S_L^t$$

angesetzt werden. Für den Leistungsfluss

$$G_L^t$$

können die Kosten mit

$$-c_{gc}^t G_L^t \, \Delta t \,\text{\i}$$

angesetzt werden. Für den Leistungsfluss

$$G_S^t$$

können die Kosten mit

$$-c_{gc}^t(v_{GS} + (2 + \kappa_{GS})G_S^t)\Delta t$$

angesetzt werden.

Die dargestellten Flussgleichungen werden in eine verallgemeinerte Form gebracht. Hierzu wird zunächst ein Zustandsvektor $x^t$ definiert, der die Leistungs- und Energieflüsse zusammenfasst:

$$x^t = (P_G^t, P_S^t, P_L^t, S_L^t, S_G^t, S^{t+1}, G_L^t, G_S^t) \tag{10}$$

Der Zustand wird durch den zeitabhängigen Parameter $y^t$ beeinflusst:

$$y^t = \left(\tilde{P}^t, \tilde{L}^t, c_{in}^t, c_{gc}^t\right) \tag{11}$$

Die Flussgleichungen lassen sich als lineare (Un-)Gleichungen formulieren:

$$M_{le}x^t \leq \begin{pmatrix} y_1^t \\ 70\%P_{inst} \end{pmatrix} \tag{12}$$

$M_{le}$ fasst die "kleiner gleich" Ungleichungen aus der Beschreibung der Leistunsflüsse zusammen:

$$M_{le} = \begin{pmatrix} 1 & 1 & 1 & 0 & 0 & 0 & 0 & 0 \\ \eta_{PG} & 0 & 0 & 0 & \eta_{SG} & 0 & -1 & -1 \end{pmatrix} \tag{13}$$

$y_1^t$ steht hierbei für die erste Komponente des Parametervektors. Für die "gleich" Gleichungen gilt dann

$$M_{eq}x^t = \begin{pmatrix} \frac{x_{SS}^{(t-1)}\eta_{SS}}{\Delta t} \\ y_2^t \end{pmatrix} \tag{14}$$

mit

$$M_{eq} = \begin{pmatrix} 0 & \eta_{PS} & 0 & -1 & -1 & \frac{1}{\Delta t} & 0 & \eta_{GS} \\ 0 & 0 & \eta_{PL} & \eta_{SL} & 0 & 0 & 1 & 0 \end{pmatrix} \tag{15}$$

Die "größer gleich" gilt dann

$$M_{ge}x^t \geq (-AC_{max}) \tag{16}$$

mit

$$M_{ge} = \begin{pmatrix} \eta_{PG} & 0 & 0 & 0 & \eta_{SG} & 0 & -1 & -1 \end{pmatrix}. \tag{17}$$

Weiterhin gelten noch die Randbedingungen $\forall i: x_i^t \geq 0$ und die Begrenzung der Speicherkapazität der Batterie $x_6^t \leq K_{Batt}$ wobei $K_{Batt}$[kWh] die Gesamtkapazität darstellt.

Die Ertragsfunktion $K^t$ lautet

$$K^t = \sum_j \gamma_j^t(y^t) x_j^t + \omega_j^t \tag{18}$$

$\gamma^t$ fasst die in $x_j^t$ linearen Terme der Erträge der Leistungs- und Energieflüsse zusammen:

$$\gamma^t = \begin{pmatrix} c_i^t(\kappa_{PG}-1)\Delta t & c_{gc}^t(-\kappa_{PS})\Delta t & c_{gc}^t(1-\kappa_{PL})\Delta t & c_{gc}^t(1-\kappa_{SL})\Delta t & \cdots \\ c_i^t(1-\kappa_{SG})\Delta t & -c_{gc}^t\kappa_{SS} & -c_{gc}^t\Delta t & -c_{gc}^t(2+\kappa_{GS})\Delta t \end{pmatrix} \tag{19}$$

$\omega_j^t$ fasst die konstanten Verlustterme der Flüsse zusammen:

$$\omega_j^t = \begin{pmatrix} -c_i^t \nu_{PG}\Delta t & -c_{gc}^t \nu_{PS}\Delta t & -c_{gc}^t \nu_{PL}\Delta t - c_{gc}^t \nu_{SL}\Delta t & \cdots \\ -c_i^t \nu_{SG}\Delta t & c_{gc}^t \nu_{SS} & 0 & -c_{gc}^t \nu_{GS}\Delta t \end{pmatrix} \tag{20}$$

Mit diesen Formulierungen kann die Betriebsführung als Lösung eines linearen Programms interpretiert werden. Diese Formulierung erlaubt es, die effizienz- und marktgesteuerte Betriebsführung zu realisieren.
Die hier vorgestellte global optimierende Betriebsführung löst das lineare Programm für alle Zeitpunkte t gleichzeitig, d. h. in voller Kenntnis der zukünftigen Produktions- und Verbrauchsverläufe. Die Optimierungsaufgabe lautet:

$$\max_{x^i} \sum_{n=0}^{M-1} K^{t+n\Delta t}\left(x^{t+n\Delta t}, y^{t+n\Delta t}\right) \tag{21}$$

Die in Gleichung (21) verwenden Zustandsgrößen und Randbedingungen lassen sich zu jeweils einem Vektor zusammenfassen:

$$\tilde{x} = \{x^1, x^2, \ldots, x^M\} \tag{22}$$

$$\tilde{y} = \{y^1, y^2, \ldots, y^M\} \tag{23}$$

Hierdurch vereinfacht sich das Optimierungsproblem zu:

$$\max_{\tilde{x}} K(\tilde{x}, \tilde{y}) \tag{24}$$

Die global optimierende Betriebsführung stellt somit bei einer vorgegebenen Menge an Verläufen $\tilde{y}$ die bestmögliche Betriebsführung dar. Dabei werden keine Vorgaben für das Systemverhalten vorgenommen. Das Systemverhalten ergibt sich einzig aus den Nebenbedingungen und der Forderung zur Optimierung von Gleichung 24.
Da bei der global optimierenden Betriebsführung die zukünftigen realisierten Erträge aus der Betriebsführung bekannt sind, besteht hier keine Notwendigkeit den Wert der gespeicherten Energie abzuschätzen. Aus diesem Grund wird dem Speicherinhalt auch kein Wert zugeordnet:

$$\gamma_6^t = -c_{gc}^t \kappa_{SS} \tag{25}$$

Da mit einer relativ hohen zeitlichen Auflösung gearbeitet wird, ist es notwendig, den Zeithorizont bei der Berechnung der globalen Optimierung zu begrenzen. Auf diese Weise kann auch sichergestellt werden, dass Fehlprognosen korrigiert werden können. Dabei wird für einen begrenzten Zeithorizont das lineare Programm komplett gelöst und der Speicherinhalt an das lineare Programm der Folgeperiode übergeben.

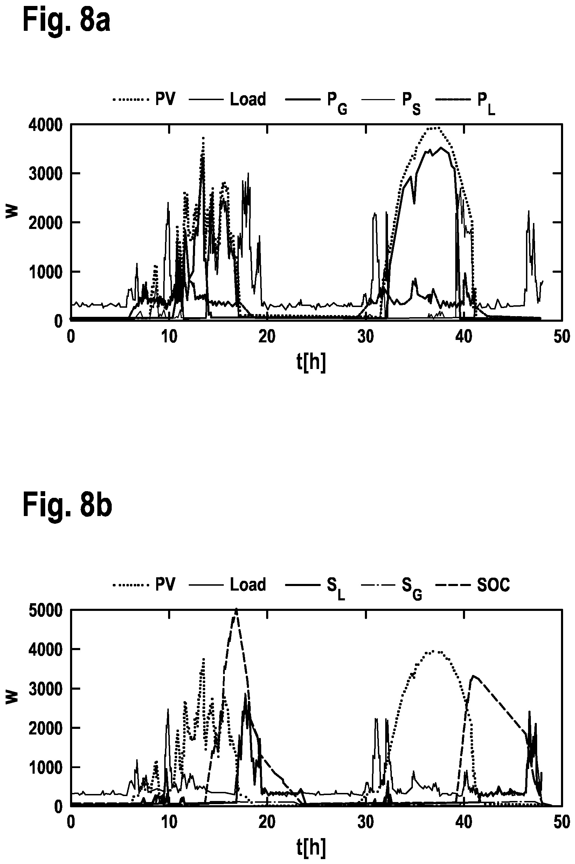

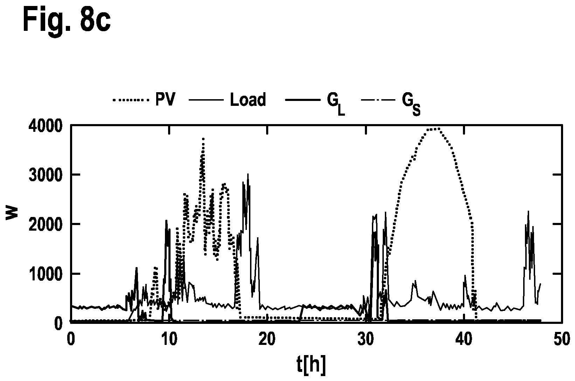

Fig. 8a bis 8c zeigen eine Darstellung von Kurvenverläufen von Energieflüssen bei Verwendung einer optimierenden Betriebsführung gemäß einem Ausführungsbeispiel der vorliegenden Erfindung. In einem kartesischen Koordinatensystem ist auf der Abszisse die Zeit in Stunden und auf der Ordinate die Leistung in Watt dargestellt. Dabei zeigt die Abszisse einen Zeitraum von zwei Tagen bzw. 50 h. Der Leistungsbereich erstreckt sich von 0 W bis 4000 W. Fig. 8a bis 8c zeigen den Leistungsfluss zwischen den einzelnen Komponenten eines Fotovoltaiksystems. Bei dem Fotovoltaiksystem kann es sich um ein Fotovoltaiksystem 100 gemäß einem Ausführungsbeispiel eines in den Figuren Fig. 1 bis Fig. 7 gezeigten Fotovoltaiksystems 100 handeln. Dabei zeigt Fig. 8a den Leistungsfluss von Generator aus, Fig. 8b zeigt den Leistungsfluss vom Speichersystem aus sowie Fig. 8C zeigt den Leistungsfluss vom Netzanschluss des Fotovoltaiksystems. In allen drei Figuren 8a bis 8c ist die vom Solargenerator erzeugte Leistung PV sowie die am Haushaltsanschluss von den Verbrauchern benötigte Last Load über die Zeit dargestellt.

Fig. 8a zeigt den Leistungsfluss $P_G$ vom Generator zum Netzanschluss, den Leistungsfluss $P_S$ vom Generator zum Speichersystem sowie den Leistungsfluss $P_L$ von Generator zum Haushalt.

Fig. 8b zeigt den Leistungsfluss $S_L$ vom Speichersystem zum Haushaltsanschluss, den Leistungsfluss $S_G$ vom Speichersystem zum Netzanschluss sowie die in dem Speichersystem gespeicherte Energie SOC.

Fig. 8c zeigt den Leistungsfluss $G_L$ vom Netzanschluss zum Haushaltsanschluss sowie den Leistungsfluss $G_S$ vom Netzanschluss zum Speichersystem.

Zusammenfassend zeigen die Figuren 8a bis 8c Energieflüsse bei Verwendung einer global optimierende Betriebsführung gemäß der vorliegenden Erfindung. Durch den Leistungsbedarfsparameter, der als eine monetäre Größe dargestellt sein kann, fällt die Nutzung des Speicherns im Verhältnis zu einem lokalen optimierende in System geringer aus.

In Fig. 8a bis 8c ist der Verlauf von zwei Tagen dargestellt. Anders als beim Stand der Technik wird der Speicher gerade so weit genutzt, dass er genau zu dem Zeitpunkt leer ist, wenn die Produktion des Folgetages die Haushaltslasten komplett übernehmen kann. Bei einer Betrachtung von wirtschaftlichen Kennzahlen, die sich bei der Anwendung der global optimierenden Betriebsführung ergeben, zeigt sich, dass die hier beschriebene Betriebsführung gemäß einem Ausführungsbeispiel der vorliegenden Erfindung 5 % bis 7 % besser abschneidet bei gleichzeitig geringerer Nutzung des Speichersystems. Das vorgestellte Verfahren mit dem Einsatz einer Prognose erlaubt eine schnellere Amortisation der Investition.

Fig. 9 zeigt ein Ablaufdiagramm eines Verfahrens 900 gemäß einem Ausführungsbeispiel der vorliegenden Erfindung. Das Verfahren 900 zur optimierenden Betriebsführung für ein Speichersystem für ein Fotovoltaiksystem umfasst in dem vorgestellten Ausführungsbeispiel vier Schritte. Das Verfahren 900 kann in Zusammenhang mit einem Fotovoltaiksystem, welches ein Energie-Management-System, einen Solargenerator und ein Speichersystem sowie einen Haushaltsanschluss und einen Netzanschluss umfasst, ausgeführt werden. Das Verfahren 900 umfasst einen Schritt 910 des Einlesens von aktuellen Kenndaten des Fotovoltaiksystems und von erwarteten Kenndaten des Fotovoltaiksystems, einen Schritt 920 des Bestimmens einer Mehrzahl von erwarteten Leistungsflüssen in dem Beobachtungszeitraum unter Verwendung der aktuellen Kenndaten und/oder der erwarteten Kenndaten, einen Schritt 930 des Bestimmens eines bedarfsorientierten Leistungsflusses der Mehrzahl von erwarteten Leistungsflüssen in zumindest einem Zeitintervall innerhalb des vordefinierten Beobachtungszeitraums unter Verwendung zumindest eines der Mehrzahl von erwarteten Leistungsflüssen zuordenbaren Leistungsbedarfsparameters sowie einen Schritt 940 des Optimierens der erwarteten Leistungsflüsse unter Verwendung des bedarfsorientierten Leistungsflusses, um eine optimierende Betriebsführung zu erzielen. Die aktuellen Kenndaten repräsentieren Produktionsdaten und ersatzweise oder ergänzend Verbrauchswerte und ersatzweise oder ergänzend einen Ladezustand des Speichersystems zum aktuellen Zeitpunkt und gleichzeitig oder ergänzend einen vorangegangenen Ladezustand aus einer Vorperiode. Dabei repräsentieren die erwarteten Kenndaten Produktionsdaten und gleichzeitig oder alternativ Verbrauchswerte zu zumindest einem zukünftigen Zeitpunkt innerhalb eines vordefinierten Beobachtungszeitraums;

In einem Ausführungsbeispiel repräsentieren die Kenndaten eine am Solargenerator abrufbare Leistung $P_t$ und/oder eine in der Batterie gespeicherte Leistung und/oder von der Batterie abrufbare Leitung $S_t$ und/oder eine zur Versorgung der Verbraucher benötigte Leistung $L_t$ und/oder eine Leistung $G_t$, die in ein Netz eingespeist oder aus dem Netz abgerufen wird, wobei die aktuellen Kenndaten Daten zu einem aktuellen und/oder vergangenen Zeitintervall und die erwarteten Kenndaten Daten zu einem zukünftigen Zeitintervall in dem Beobachtungszeitraum repräsentieren.

In einem Ausführungsbeispiel werden im Schritt des Bestimmens die erwarteten Leistungsflüsse unter Verwendung je eines einem erwarteten Leistungsfluss zuordenbaren Wirkungsgrad bestimmt.

In einem nicht gezeigten Ausführungsbeispiel weist das Verfahren 900 einen Schritt des Ausgebens eines Steuersignals auf. Dabei ist das Steuersignal ausgebildet, den Energiefluss zwischen den Komponenten des Fotovoltaiksystems entsprechend dem im Schritt des Optimierens gewählten Energieflusses zu steuern.

In einem Ausführungsbeispiel werden im Schritt des Einlesens die erwarteten Kenndaten von einer Prognoseeinheit eingelesen. Die Prognoseeinheit ist in einem Ausführungsbeispiel ein Teil des Energie-Management-Systems.

In einem Ausführungsbeispiel repräsentieren im Schritt des Einlesens die erwarteten Kenndaten Produktionsdaten und gleichzeitig oder alternativ Verbrauchswerte von einem ersten Zeitintervall und zumindest einem zeitlich dem ersten Zeitintervall nachfolgenden zweiten Zeitintervall innerhalb des vordefinierten Beobachtungszeitraums und gleichzeitig oder alternativ im Schritt des Bestimmens des bedarfsorientierten Leistungsflusses wird die Mehrzahl von erwarteten Leistungsflüssen für eine Mehrzahl von Zeitintervallen innerhalb des vordefinierten Beobachtungszeitraums bestimmt.

In einem Ausführungsbeispiel wird im Schritt des Bestimmens der Mehrzahl von erwarteten Leistungsflüssen für eine Mehrzahl von Zeitintervallen in dem Beobachtungszeitraum bestimmt.

In einem Ausführungsbeispiel ist im Schritt des Bestimmens eines bedarfsorientierten Leistungsflusses je ein Leistungsbedarfsparameter einem Zeitintervall innerhalb des vordefinierten Beobachtungszeitraums zugeordnet.

Ein Aspekt des erfindungsgemäßen Verfahrens ist konzeptionell auf die Verwendung in Fotovoltaik-Speichersystemen ausgerichtet. Die verwendete Methodik kann allerdings problemlos auf Anwendungen übertragen werden, in denen Leistungs- und Energieflüsse nach Kostengesichtspunkten oder alternativ bedarfsorientiert in Echtzeit kontrolliert werden.

Fig. 10 zeigt ein Blockschaltbild einer Vorrichtung 1000 gemäß einem Ausführungsbeispiel der vorliegenden Erfindung. Die Vorrichtung 1000 ist ausgebildet, die Schritte eines Ausführungsbeispiels des in Fig. 9 beschriebenen Verfahrens in entsprechenden Einrichtungen durchzuführen. Die Vorrichtung kann mit einem Ausführungsbeispiel eines Fotovoltaiksystems, wie es in den Figuren Fig. 1 bis 7 beschrieben ist, eingesetzt werden. Dabei umfasst die Vorrichtung eine Schnittstelle 1010 beziehungsweise eine Einrichtung 1010 zum Einlesen von aktuellen Kenndaten des Fotovoltaiksystems und von erwarteten Kenndaten des Fotovoltaiksystems, wobei die aktuellen Kenndaten Produktionsdaten und/oder Verbrauchswerte und/oder einen Ladezustand des Speichersystems zum aktuellen Zeitpunkt und/oder einen vorangegangenen Ladezustand aus einer Vorperiode repräsentieren, wobei die erwarteten Kenndaten Produktionsdaten und/oder Verbrauchswerte zu zumindest einem zukünftigen Zeitpunkt innerhalb eines vordefinierten Beobachtungszeitraums repräsentieren. Weiterhin weist die Vorrichtung 1000 eine Einrichtung 1020 zum Bestimmen einer Mehrzahl von erwarteten Leistungsflüssen in dem Beobachtungszeitraum unter Verwendung der aktuellen Kenndaten und/oder der erwarteten Kenndaten sowie eine Einrichtung 1030 zum Bestimmen eines bedarfsorientierten Leistungsflusses der Mehrzahl von erwarteten Leistungsflüssen in zumindest einem Zeitintervall innerhalb des vordefinierten Beobachtungszeitraums unter Verwendung zumindest eines der Mehrzahl von erwarteten Leistungsflüssen zuordenbaren Leistungsbedarfsparameters. In einer Einrichtung 1040 zum Optimieren werden die erwarteten Leistungsflüsse unter Verwendung des bedarfsorientierten Leistungsflusses optimiert, um eine optimierende Betriebsführung zu erzielen.

In einem Ausführungsbeispiel umfasst die Vorrichtung 1000 eine optionale Schnittstelle zum Ausgeben eines Steuersignals, wobei das Steuersignal ausgebildet ist, den Energiefluss zwischen den Komponenten des Fotovoltaiksystems entsprechend dem im in der Einrichtung 1040 zum Optimieren gewählten Energieflusses zu steuern.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (900) zur optimierenden Betriebsführung für ein Speichersystem(104) für ein Fotovoltaiksystem (100), wobei das Fotovoltaiksystem (100) ein Energie-Management-System (116) aufweist, wobei das Fotovoltaiksystem (100) einen Solargenerator (102) und das Speichersystem (104) sowie einen Haushaltsanschluss (106) und einen Netzanschluss (108) umfasst, wobei das Verfahren (900) die folgenden Schritte aufweist:

   Einlesen (910) von aktuellen Kenndaten des Fotovoltaiksystems (100) und von erwarteten Kenndaten des Fotovoltaiksystems (100), wobei die aktuellen Kenndaten Produktionsdaten und/oder Verbrauchswerte und/oder einen Ladezustand (122) des Speichersystems (104) zum aktuellen Zeitpunkt und/oder einen vorangegangenen Ladezustand (122) aus einer Vorperiode repräsentieren, wobei die erwarteten Kenndaten Produktionsdaten und/oder Verbrauchswerte zu zumindest einem zukünftigen Zeitpunkt innerhalb eines vordefinierten Beobachtungszeitraums repräsentieren;

Bestimmen (920) einer Mehrzahl von erwarteten Leistungsflüssen (114) in dem Beobachtungszeitraum unter Verwendung der aktuellen Kenndaten und/oder der erwarteten Kenndaten; wobei in dem Schritt (920) des Bestimmens die erwarteten Leistungsflüsse unter Verwendung je eines einem erwarteten Leistungsfluss zuordenbaren Wirkungsgrad bestimmtwerden;

Bestimmen (930) einer Netzeinspeisung aus der Mehrzahl von erwarteten Leistungsflüssen in zumindest einem Zeitintervall innerhalb des vordefinierten Beobachtungszeitraums unter Verwendung zumindest eines der Mehrzahl von erwarteten Leistungsflüssen zuordenbaren Leistungsbedarfsparameters, der an ein Bezahlsystem gekoppelt ist; und

Optimieren (940) der erwarteten Leistungsflüsse, um eine Herstellung eines stabilen Stromnetzes hinsichtlich Angebot und Nachfrage an Energie zu erzielen.

2. Verfahren (900) gemäß Anspruch 1, bei dem die Kenndaten eine am Solargenerator (102) abrufbare Leistung Pt und/oder eine in dem Speichersystem (104) gespeicherte Leistung und/oder von den Speichersystem (104) abrufbare Leitung $S_t$ und/oder eine zur Versorgung der Verbraucher benötigte Leistung $L_t$ und/oder eine Leistung $G_t$, die in ein Netz eingespeist oder aus dem Netz abgerufen wird, repräsentiert, wobei die aktuellen Kenndaten Daten zu einem aktuellen und/oder vergangenen Zeitintervall und die erwarteten Kenndaten Daten zu einem zukünftigen Zeitintervall indem Beobachtungszeitraum repräsentieren.

3. Verfahren (900) gemäß einem der vorangegangenen Ansprüche, mit einem Schritt des Ausgebens eines Steuersignals, wobei das Steuersignal ausgebildet ist, den Leistungsfluss zwischen den Komponenten des Fotovoltaiksystems (100) entsprechend dem im Schritt (940) des Optimierens gewählten Leistungsflusses zu steuern.

4. Verfahren (900) gemäß einem der vorangegangenen Ansprüche, bei dem im Schritt (910) des Einlesens die erwarteten Kenndaten von einer Prognoseeinheiteingelesenwerden.

5. Verfahren (900) gemäß einem der vorangegangenen Ansprüche, bei dem im Schritt (910) des Einlesens die erwarteten Kenndaten Produktionsdaten und/oder Verbrauchswerte von einem ersten Zeitintervall und zumindest einem zeitlich dem ersten Zeitintervall nachfolgenden zweiten Zeitintervall innerhalb des vordefinierten Beobachtungszeitraums repräsentieren und/oder im Schritt (920) des Bestimmens des bedarfsorientierten Leistungsflusses die Mehrzahl von erwarteten Leistungsflüssen für eine Mehrzahl von Zeitintervallen innerhalb des vordefinierten Beobachtungszeitraums bestimmtwird.

6. Verfahren (900) gemäß einem der vorangegangenen Ansprüche, bei dem im Schritt (920) des Bestimmens der Mehrzahl von erwarteten Leistungsflüssen für eine Mehrzahl von Zeitintervallen in dem Beobachtungszeitraum bestimmt wird.

7. Verfahren (900) gemäß einem der vorangegangenen Ansprüche, bei dem im Schritt (930) des Bestimmens eines bedarfsorientierten Leistungsflusses je ein Leistungsbedarfsparameter einem Zeitintervall innerhalb des vordefinierten Beobachtungszeitraums zugeordnet ist.

8. Vorrichtung (1000) mit Einrichtungen, die ausgebildet ist, um die Schritte eines Verfahrens (900) gemäß einem der Ansprüche 1 bis 7 in entsprechenden Einrichtungen durchzuführen.

9. Fotovoltaiksystem (100) mit einem Solargenerator (102) und/oder einem Speichersystem (104) und/oder einem Energie-Management-System (116) und einer Vorrichtung (1000) gemäß Anspruch 8 zur optimierenden Betriebsführung für das Speichersystem (104).

10. Computer-Programmprodukt mit Programmcode zur Durchführung des Verfahrens (900) nach einem der Ansprüche 1 bis 7, wenn das Programmprodukt auf einer Vorrichtung (1000) ausgeführt wird.

**Claims**

1. Method (900) for optimization-based operational management for a storage system (104) for a photovoltaic system (100), wherein the photovoltaic system (100) has an energy management system (116), wherein the photovoltaic system (100) comprises a solar generator (102) and the storage system (104) and also a household connection (106) and a grid connection (108), wherein the method (900) has the following steps:

reading in (910) present characteristic data relating to the photovoltaic system (100) and expected characteristic data relating to the photovoltaic system (100), wherein the present characteristic data represent production data and/or consumption values and/or a state of charge (122) of the storage system (104) pertaining to the present time and/or a preceding state of charge (122) from a prior period, the expected characteristic data representing production data and/or consumption values pertaining to at least one future time within a predefined observation period;

determining (920) a plurality of expected power flows (114) in the observation period using the present characteristic data and/or the expected characteristic data; wherein, in the determination step (920), the expected power flows are determined using an efficiency which can be assigned to each expected power flow;

determining (930) a grid feed-in from the plurality of expected power flows in at least one interval of time within the predefined observation period using at least one power requirement parameter which can be assigned to the plurality of expected power flows and which is coupled to a payment system; and

optimizing (940) the expected power flows in order to succeed in establishing a stable power grid with regard to supply and demand of energy.

2. Method (900) according to Claim 1, in which the characteristic data represent a power Pt which can be retrieved at the solar generator (102) and/or a power which is stored in the storage system (104) and/or a power $S_t$ which can be retrieved from the storage system (104) and/or a power $L_t$ needed to supply power to the loads and/or a power $G_t$ which is fed into a grid or is retrieved from the grid, wherein the present characteristic data represent data pertaining to a present and/or past interval of time and the expected characteristic data represent data pertaining to a future interval of time in the observation period.

3. Method (900) according to either of the preceding claims, having a step of outputting a control signal, wherein the control signal is designed to control the power flow between the components of the photovoltaic system (100) according to the power flow selected in the optimization step (940).

4. Method (900) according to one of the preceding claims, in which, in the reading-in step (910), the expected characteristic data are read in from a prediction unit.

5. Method (900) according to one of the preceding claims, in which, in the reading-in step (910), the expected characteristic data represent production data and/or consumption values from a first interval of time and at least a second interval of time subsequent to the first interval of time within the predefined observation period and/or, in the step (920) of determining the requirement-oriented power flow, the plurality of expected power flows are determined for a plurality of intervals of time within the predefined observation period.

6. Method (900) according to one of the preceding claims, in which, in the step (920) of determining the plurality of expected power flows, is determined for a plurality of intervals of time in the observation period.

7. Method (900) according to one of the preceding claims, in which, in the step (930) of determining a requirement-oriented power flow, a power requirement parameter is assigned to each interval of time within the predefined observation period.

8. Apparatus (1000) having devices, which is designed to carry out the steps of a method (900) according to one of Claims 1 to 7 in corresponding devices.

9. Photovoltaic system (100) having a solar generator (102) and/or a storage system (104) and/or an energy management system (116) and an apparatus (1000) according to Claim 8 for optimization-based operational management for the storage system (104).

10. Computer program product having program code for carrying out the method (900) according to one of Claims 1 to 7 when the program product is executed on an apparatus (1000).

**Revendications**

1. Procédé (900) d'optimisation de la gestion opérationnelle d'un système de stockage (104) d'un système photovoltaïque (100), le système photovoltaïque (100) comportant un système de gestion d'énergie (116), le système photovoltaïque (100) comprenant un générateur solaire (102) et le système de stockage (104) ainsi qu'un raccordement domestique (106) et un raccordement au réseau (108), le procédé (900) comprenant les étapes suivantes :

lire (910) des données caractéristiques actuelles du système photovoltaïque (100) et des données caractéristiques attendues du système photovoltaïque (100), les données caractéristiques actuelles représentant des données de production et/ou des valeurs de consommation et/ou un état de charge (122) du système de stockage (104) à l'instant actuel et/ou un état de charge précédent (122) d'une période précédente, les données caractéristiques attendues représentant des données de production et/ou des valeurs de consommation au moins à un instant futur dans un laps d'observation prédéfinie ;

déterminer (920) une pluralité de flux de puissance attendus (114) dans le laps de temps d'observation à l'aide des données caractéristiques actuelles et/ou des données caractéristiques attendues ; à l'étape (920) de détermination, les flux de puissance attendus étant déterminés à l'aide d'un rendement qui peut être associé à un flux de puissance attendu ;

déterminer (930) une alimentation de réseau à partir de la pluralité de flux de puissance attendus dans au moins un intervalle de temps dans le laps de temps d'observation prédéfinie à l'aide d'au moins un paramètre de besoin de puissance qui peut être associé à la pluralité de flux de puissance attendus et qui est couplé à un système de paiement ; et

optimiser (940) les flux de puissance attendus pour parvenir à réaliser un réseau électrique stable en termes d'offre et de demande d'énergie.

**2.** Procédé (900) selon la revendication 1, dans lequel les données caractéristiques représentent une puissance Pt qui peut être prélevée sur le générateur solaire (102) et/ou une puissance stockée dans le système de stockage (104) et/ou une puissance $S_t$ qui peut être prélevée sur le système de stockage (104) et/ou une puissance $L_t$ nécessaire pour alimenter les consommateurs et/ou une puissance $G_t$ qui est injectée dans un réseau ou prélevée sur le réseau, les données caractéristiques actuelles représentant des données à un intervalle de temps actuel et/ou passé et les données caractéristiques attendues représentant des données à un intervalle de temps futur dans le laps de temps d'observation.

**3.** Procédé (900) selon l'une des revendications précédentes, ledit procédé comprenant une étape de délivrance d'un signal de commande, le signal de commande étant conçu pour commander le flux de puissance entre les composants du système photovoltaïque (100) en fonction du flux de puissance sélectionné à l'étape (940) d'optimisation.

**4.** Procédé (900) selon l'une des revendications précédentes, dans lequel, à l'étape (910) de lecture, les données caractéristiques attendues sont lues par une unité de pronostic.

**5.** Procédé (900) selon l'une des revendications précédentes, dans lequel, à l'étape (910) de lecture, les données caractéristiques attendues représentent des données de production et/ou des valeurs de consommation d'un premier intervalle de temps et d'au moins un deuxième intervalle de temps suivant le premier intervalle de temps dans le laps de temps d'observation prédéfini et/ou, à l'étape (920) de détermination du flux de puissance orienté vers la demande, la pluralité de flux de puissance attendus est déterminée pour une pluralité d'intervalles de temps dans le laps de temps d'observation prédéfini.

**6.** Procédé (900) selon l'une des revendications précédentes, dans lequel, à l'étape (920) de détermination de la pluralité de flux de puissance attendus, est déterminée pour une pluralité d'intervalles de temps dans le laps de temps d'observation.

**7.** Procédé (900) selon l'une des revendications précédentes, dans lequel, à l'étape (930) de détermination d'un flux de puissance orienté vers la demande, un paramètre de demande de puissance est associé à un intervalle de temps dans le laps de temps d'observation prédéfini.

**8.** Dispositif (1000) pourvu de moyens qui est conçu pour réaliser les étapes d'un procédé (900) selon l'une des revendications 1 à 7 dans des moyens correspondants.

**9.** Système photovoltaïque (100) comprenant un générateur solaire (102) et/ou un système de stockage (104) et/ou un système de gestion d'énergie (116) et un dispositif (1000) selon la revendication 8 destiné à optimiser la gestion opérationnelle du système de stockage (104).

**10.** Progiciel comprenant un code de programme destiné à mettre en œuvre le procédé (900) selon l'une des revendications 1 à 7, lorsque le progiciel est exécuté dans un dispositif (1000).

# Fig. 1

# Fig. 2

# Fig. 3a

# Fig. 3b

# Fig. 4

**Fig. 5a**

**Fig. 5b**

**Fig. 5c**

106    102    100    104    108    116

**Fig. 5d**

106    102    100    104    108    116

# Fig. 6

# Fig. 7

# Fig. 8a

# Fig. 8b

# Fig. 8c

**Fig. 9**

900

910

920

930

940

**Fig. 10**

1010

1020

1030

1040

1000

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120323386 A1

- US 20100179704 A1